# EUROPÄISCHE PATENTANMELDUNG

(11) **EP 4 180 363 A1**
(43) Veröffentlichungstag der Anmeldung: **17.05.2023**
(21) Anmeldenummer: 22207682.0
(22) Anmeldetag: 16.11.2022
(51) Int. Cl.: B65G 15/50, F16G 3/00, F16G 3/10

(54) **GURTBAND FÜR FÖRDERANLAGEN**

(30) Priorität: 16.11.2021 DE 102021129886
(71) Anmelder: Stadler Anlagenbau GmbH, 88361 Altshausen (DE)
(72) Erfinder: Buck, Tobias, 88356 Ostrach (DE)
(74) Vertreter: Otten, Roth, Dobler & Partner mbB Patentanwälte

(57) **Zusammenfassung**

Gurtband 3 für Förderanlagen 1, wobei die Förderanlage 1 eine erste Umlenkrolle 8, sowie eine zweite Umlenkrolle 9 umfasst wobei das Gurtband 3 in sich geschlossen mittels eines spiralförmig geführten Gurtstreifens 2 gebildet ist, wobei eine erste Flanke des Gurtstreifens (4) mit einer zweiten Flanke des Gurtstreifens (5) zumindest abschnittsweise als ein gemeinsames Verbindungsmittel ausgebildet ist wobei das Verbindungsmittel als ein Kettenformschluss ausgebildet ist.

## Beschreibung

Die Erfindung betrifft ein Gurtband nach dem Oberbegriff des Anspruchs 1, sowie ein Verfahren zur Installation eines Gurtbandes nach dem Oberbegriff des Anspruchs 6.

Bei Förderanlagen, beispielsweise bei Sortieranlagen in der Recyclingindustrie, kommen Gurtbänder zum Einsatz, welche endlos ausgebildet und um Umlenkrollen gespannt, Materialien unterschiedlichster Natur von einem ersten Ort zu einem zweiten Ort transportieren. Derartige Gurtbänder unterliegen unterschiedlichster Beanspruchung und verschiedenstem Verschleiß, wodurch sie, beispielsweise in einem Schadensfall, ausgetauscht werden müssen. Wenigstens jedoch müssen sie bei der Erstinstallation der Förderanlage zunächst an dieser installiert werden.

In der Regel muss bei einem Austausch eines Gurtbandes zu aller erst die Förderanlage zugänglich gemacht werden, was bedeutet, dass bestehende Anlagenteile aufwändig abgebaut und entfernt werden müssen. Das verschlissene Alt-Gurtband muss zunächst entfernt werden und ein neues, in Länge und Breite an die Förderanlage angepasste, Gurtband wird sodann installiert, indem es um die Umlenkrollen der Förderanlage gelegt und seine Endbereiche miteinander verbunden werden. Mitunter werden hierbei beispielsweise entsprechend geeignete Vulkanisieranlagen eingesetzt werden, was einen enormen Platzbedarf im nahen Umfeld der Förderanlage erfordert und die Ausfallzeit der Förderanlage deutlich verlängert. Die in der Regel horizontal zur Laufrichtung der Förderanlage liegende Verbindungsstelle des Gurtbandes unterliegt bei jedem Passieren der Umlenkrollen besonderer Belastung, was sich an der störenden Geräuschentwicklung in dem jeweiligen Moment erkennen lässt.

Aufgabe der Erfindung ist es daher, eine verbesserte Möglichkeit zur Installation von Gurtbändern an beliebig dimensionierten Förderanlagen zu schaffen.

Diese Aufgabe wird in Verbindung mit dem Oberbegriff des Patentanspruchs 1, bzw. 6, erfindungsgemäß durch die kennzeichnenden Merkmale des Patentanspruchs 1 bzw. 6 gelöst.

In den jeweiligen Unteransprüchen sind vorteilhafte und zweckmäßige Weiterbildungen angegeben.

Im Sinne der Erfindung ist unter einem Gurtband ein endloses Gurtband oder ein endloser Fördergurt zu verstehen, welcher umlaufend eingesetzt wird.

Weiterhin ist im Sinne der Erfindung unter einer Förderanlage auch eine schnelllaufende Förderanlage mit Fördergeschwindigkeiten von etwa 3 m/s oder mehr zu verstehen.

Gemäß einem Aspekt ist ein Gurtband für Förderanlagen vorgesehen, wobei die Förderanlage eine erste Umlenkrolle, sowie eine zweite Umlenkrolle umfasst, wobei das Gurtband mittels eines spiralförmig in sich geschlossenen Gurtstreifens gebildet ist, wobei eine erste Flanke des Gurtstreifens mit einer zweiten Flanke des Gurtstreifens zumindest abschnittsweise als ein gemeinsames Verbindungsmittel ausgebildet ist, wobei das Verbindungsmittel als ein Kettenformschluss ausgebildet ist.

Dadurch dass das Gurtband mittels des Gurtstreifens, gebildet ist, können vorteilhaft unterschiedliche Dimensionierung in Länge und Breite der Förderanlage mit demselben Gurtstreifen berücksichtigt und hergestellt werden. Der Gurtstreifen kann in beliebiger Länge, beispielsweise auf einer Rolle aufgerollt vorrätig gehalten werden und auf ein Lagern von an die jeweilige Förderanlage angepasster Gurtbänder kann somit verzichtet werden. Dies spart wertvollen Lagerraum, was sich positiv auf die Reduktion etwaiger Lagerkosten auswirken kann.

Die im Betrieb der Förderanlage auftretenden Kräfte können symmetrisch auf beide Flanken des Gurtstreifens verteilt werden und eine sichere und stabile Verbindung, sowie eine einfache Installation ermöglicht werden.

Darüber hinaus ermöglichen derartige Verbindungsmittel ein rasches Verbinden der beiden Flanken des Gurtstreifens, was sich vorteilhaft auf eine Reduktion des Zeitaufwandes bei Installation des Gurtbandes auswirken kann.

Zusätzlich kann der Zeitaufwand der zur Installation eines solchen Gurtbandes benötigt wird deutlich verringert werden, da z.B. nur die Bereiche an den Umlenkrollen der Förderanlage zugänglich gemacht werden müssen, um den Gurtstreifen einzuführen, und weitaus weniger Teile der Förderanlage abgebaut werden müssen.

Die in sich geschlossene Ausbildung des Gurtbandes erfolgt dabei durch eine Anpassung der Länge des Gurtstreifens entsprechend der Abwicklung des spiralförmigen Aufbaus an den Umfang des zu erstellenden Gurtbandes. In sich geschlossen bedeutet dabei die in sich geschlossene Form des Gurtbandes, welches durch einen einlaufenden und einen auslaufenden Endbereich des Gurtstreifens zumindest teilweise begrenzt wird.

Weiterhin ist vorgesehen, dass die erste Flanke des Gurtstreifens mit der zweiten Flanke des Gurtstreifens zumindest abschnittsweise nicht lösbar verbunden ist.

Hierdurch kann eine stabile und sichere Verbindung der Flanken ermöglicht werden, was sich vorteilhaft auf den Betrieb der Förderanlage auswirken kann. Zusätzlich kann die Geräuschentwicklung im Betrieb der Förderanlage reduziert werden, da die Flanken des Gurtstreifens kontinuierlich und gleichmäßig über die Umlenkrollen abrollen und somit kein periodisches Geräusch auf Grund etwaiger orthogonal zur Laufrichtung der Förderanlage angeordneter Verbindung an den Umlenkrollen auftritt. Hierdurch wird zusätzlich die an dem Gurtband auftretende Belastung gleichmäßig auf die gesamte Länge der Flanken des Gurtstreifens verteilt, was für eine längere Lebensdauer des Gurtbandes sorgen kann.

Weiterhin ist vorgesehen, dass das Verbindungsmittel in der Art eines Gurtverbinders, bevorzugt in der Art eines Reißverschlusses, ausgebildet ist.

Vorteilhaft kann so auf zusätzliches Werkzeug bei der Installation verzichtet werden, was den Zeitaufwand und den Kostenaufwand verringern kann.

Außerdem ist vorgesehen, dass der Gurtstreifen eine Breite zwischen 500mm und 100mm, insbesondere zwischen 400mm und 200mm, bevorzugt zwischen 300mm und 250mm aufweist.

Hierdurch kann vorteilhaft ein Optimum zwischen handhabbarer Breite des Gurtstreifens und möglichst zügiger Bildung einer gewünschten Breite des Gurtbandes ermöglicht werden.

Weiterhin ist vorgesehen, dass ein beliebiger Verbindungspunkt der ersten Flanke des Gurtstreifens mit einem beliebigen komplementären Verbindungspunkt der zweiten Flanke des Gurtstreifens verbindbar ist.

Vorteilhaft kann so ein flexibles Verbinden der Flanken miteinander ermöglicht werden, wodurch das Gurtband beispielsweise für beliebige Förderbandlängen z.B. vor Ort angepasst werden kann und auf eine Längenanpassung des Gurtbandes vor dessen Installation verzichtet werden kann. Förderanlagen mit verschiedenen Maßen können so vorteilhaft mit dem Gurtband versehen werden und die Fertigung eines in Länge und Breite vorgefertigten Gurtbandes kann entfallen. Der Verbindungspunkt der ersten Flanke sowie der komplementäre Verbindungspunkt der zweiten Flanke sind dabei in ihrer Position entlang der Flanke beliebig, jedoch zueinander so komplementär abgestimmt, dass eine Verbindung technisch ausgebildet wird (z.B. Öse und Haken oder Keder und Aufnahme, usw.).

Außerdem ist vorgesehen, dass das Verbindungsmittel ausschließlich die erste Flanke des Gurtstreifens mit der zweiten Flanke des Gurtstreifens verbindet.

Dies kann sich vorteilhaft bei der Installation und dem Anbringen des Gurtstreifens zur Bildung des Gurtbandes auswirken, da eine eindeutige Ausrichtung des Gurtstreifens ermöglicht werden kann.

Darüber hinaus ist vorgesehen, dass der Gurtstreifen einen Schräglauf zu den Umlenkrollen aufweist.

Vorteilhaft ermöglicht dies eine Verbesserung der Stabilität des Gurtbandes, da die auf das Gurtband beispielsweise parallel oder orthogonal in Laufrichtung der Förderanlage wirkenden Kräfte besser verteilt werden.

Weiterhin ist vorgesehen, dass der Gurtstreifen an den Rändern des Gurtbandes eine Keilform aufweist.

Mittels einer Keilform des Gurtstreifens an den Rändern des Gurtbandes kann vorteilhaft ein Überlappen und ein nicht vollständig parallel zur Laufrichtung der Förderanlage ausgebildetes Gurtband verhindert werden. Der Schräglauf des Gurtstreifens an den Rändern des Gurtbandes so kompensiert. Die Keilform kann beispielsweise in Folge und mittels eines in Laufrichtung der Förderanlage erfolgten Beschnitts, beispielsweise zur Erzeugung eines Saums, des Gurtbandes erzeugt sein.

Außerdem ist vorgesehen, dass das Gurtband längenvariabel und/oder breitenvariabel ausgebildet ist.

Hierdurch können beliebig breite und/oder beliebig lange Förderanlagen mit dem aus dem Gurtstreifen gebildeten Gurtband versehen werden und eine der Installation des Gurtbandes vorausgehende Bemaßung kann entfallen.

Weiterhin ist ein Verfahren zur Installation eines Gurtbandes vorgesehen, umfassend die Verfahrensschritte:
- Umschlingen der erste Umlenkrolle der Förderanlage, sowie der zweiten Umlenkrolle der Förderanlage mittels eines Anfangsbereichs des Gurtstreifens;
- abschnittsweises Verbinden der ersten Flanke des Gurtstreifens mit der zweiten Flanke des Gurtstreifens;
- fortlaufend spiralförmiges Verbinden der Flanken des Gurtstreifens zur vollen Breite der Förderanlage zur Bildung des Gurtbandes;
- Besäumen des zu dem Gurtband gebildeten Gurtstreifens an den Flanken der Förderanlage.

Hierdurch kann vorteilhaft ein zügiges Installieren des Gurtbandes ermöglicht werden und ein Ausfall der Förderanlage minimiert werden. Weiterhin kann hierbei auf ein Abbauen etwaiger Teile der Förderanlagen verzichtet werden, da nur ein Bereich am Anfang und am Ende der Förderanlage zugänglich gemacht werden muss.

Außerdem ist vorgesehen, dass die erste Umlenkrolle, sowie die zweite Umlenkrolle entgegengesetzt der Laufrichtung der Förderanlage umschlungen werden.

Hierdurch propagiert die Spiralform des Gurtstreifens entgegen der Laufrichtung der Förderanlage und ein ungewolltes Lösen des Gurtstreifens im Betrieb oder während der Installation kann vorteilhaft verhindert werden.

Weiterhin sind bei dem Verfahren die weiteren Verfahrensschritte vorgesehen:
- Befestigen eines Anfangsbereichs des Gurtstreifens an einem bereits vorhandenen Alt-Gurtband;
- Entfernen des Alt-Gurtbandes.

Hierdurch kann in vorteilhafter Weise im Falle eines bereits bestehenden und auszutauschenden Alt-Gurtbandes die Installation des Gurtbandes vereinfacht ermöglicht werden. Das Alt-Gurtband kann somit zur Installation des Gurtbandes genutzt werden.

Weitere Einzelheiten der Erfindung werden unter Zuhilfenahme der Figuren anhand eines schematisch dargestellten Ausführungsbeispiels beschrieben.

Hierbei zeigt die
- Figur 1: eine perspektivische Ansicht einer Förderanlage mit installiertem Gurtband;
- Figur 2: eine Draufsicht einer Förderanlage mit teilweise installiertem und aus einem Gurtstreifen gebildeten Gurtband;
- Figur 3: eine Draufsicht einer Förderanlage mit teilweise installiertem und einseitig beschnittenem Gurtband;
- Figur 4: eine Draufsicht einer Förderanlage mit installiertem und beidseitig beschnittenen Gurtband; sowie
- Figur 5: eine Nahaufnahme eines als Kettenformschluss ausgebildeten und die erste mit der zweiten Flanke eines Gurtstreifens verbindenden Verbindungsmittels.

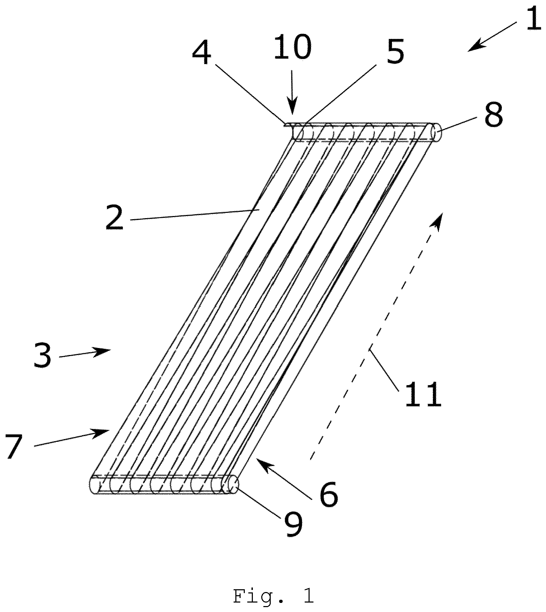

Die Figur 1 zeigt schematisch eine sich in eine exemplarisch eingezeichnete Laufrichtung 11 bewegende Förderanlage 1 mit einer ersten Umlenkrolle 8 und einer zweiten Umlenkrolle 9 in perspektivischer Ansicht. Weiterhin ist ein an den Umlenkrollen 8, 9 installiertes Gurtband 3 dargestellt, das aus einem in sich spiralförmig geschlossenen Gurtstreifen 2 gebildet ist. Vorteilhaft ist es so auf die Umlenkrollen 8, 9 aufgezogen, dass die Spiralform des Gurtstreifens 2 entgegen der Laufrichtung 11 der Förderanlage 1 propagiert.

Eine erste Flanke des Gurtstreifens 4 ist mit einer zweiten Flanke des Gurtstreifens 5 nicht lösbar verbunden, was vorteilhaft mittels eines hier nicht dargestellten gemeinsamen Verbindungsmittels in der Art eines Reißverschlusses ermöglicht sein kann.

Der Gurtstreifen weist eine Breite (nicht bezeichnet) zwischen 500 mm und 100 mm auf, was sich auf Grund der Dimensionierung der ebenfalls nicht näher bezeichneten Breite der dargestellten Förderanlage als vorteilhaft hinsichtlich eines zeiteffizienten Umschlingens der Förderanlage 1 erweisen kann.

Zusätzlich ist in Figur 1 dargestellt, dass an einer ersten Flanke der Förderanlage 6 das aus einem Gurtstreifen gebildete Gurtband bereits besäumt ist, was an einer zweiten Flanke der Förderanlage 7 noch nicht geschehen ist.

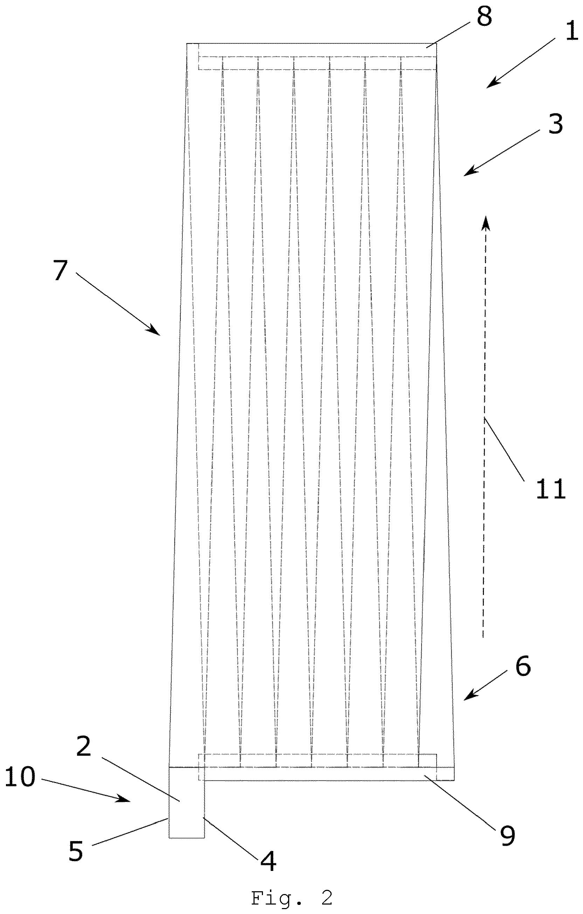

Analog zu der Figur 1 zeigen die Figuren 2, 3 und 4 eine Draufsicht der sich in die Laufrichtung 11 bewegende Förderanlage 1 mit der ersten Umlenkrolle 8 und der zweiten Umlenkrolle 9. Das an den Umlenkrollen 8, 9 installierte Gurtband 3 ist aus dem in sich spiralförmig geschlossenen Gurtstreifen 2 gebildet. Die Spiralform des Gurtstreifens 2 ist orthogonal zur Laufrichtung 11 des Gurtbandes 3 ausgebildet. Die erste Flanke des Gurtreifens 4 ist mit der zweiten Flanke des Gurtstreifens 5 als gemeinsames Verbindungsmittel 14 ausgebildet. Vorteilhaft kann so eine zügige und zeitsparende Installation des Gurtbandes 3, respektive ein Austausch eines bereits vorhandenen und auszutauschenden Alt-Gurtbandes (nicht dargestellt) ermöglicht werden.

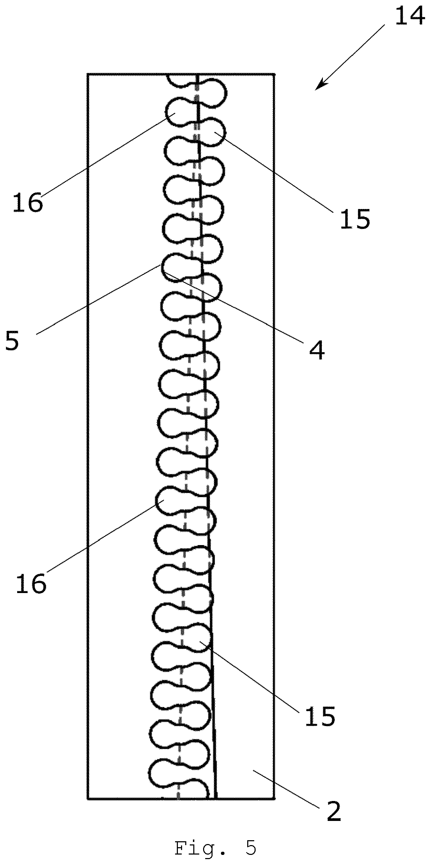

Das Verbindungsmittel 14 ist als Kettenformschluss ausgebildet, was ausschnittsweise als Nahaufnahme in der in Figur 5 dargestellt ist. Vorteilhaft kann zusätzlich die Installation ohne zusätzliches Werkzeug ermöglicht und dadurch Zeit eingespart werden. Darüber hinaus werden auf das Gurtband wirkende Kräfte optimal verteilt und etwaige Beschädigungen des Gurtbandes, beispielsweise im Betrieb der Förderanlage können minimiert werden.

In der Figur 5 ist weiterhin dargestellt, dass die erste Flanke des Gurtstreifens 4 mit der zweiten Flanke des Gurtstreifens 5 zumindest abschnittsweise verbunden ist. Nicht dargestellt ist, dass das Verbindungsmittel 14 beispielsweise in der Art eines Gurtverbinders, oder eines Reißverschlusses ausgebildet sein kann und insbesondere nicht lösbar die erste Flanke des Gurtstreifens 4 mit der zweiten Flanke des Gurtstreifens 5 verbindet. Außerdem ist zu sehen, dass jeder Verbindungspunkt der ersten Flanke des Gurtstreifens 15 mit jedem Verbindungspunkt der zweiten Flanke des Gurtstreifens 15 verbindbar ist, sowie dass ausschließliche die erste Flanke des Gurtstreifens 4 mit der zweiten Flanke des Gurtstreifens 5 verbunden ist.

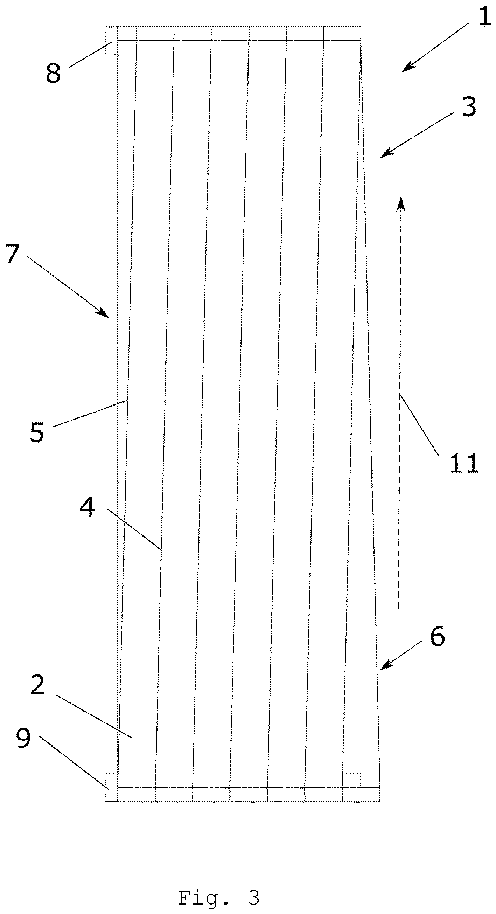

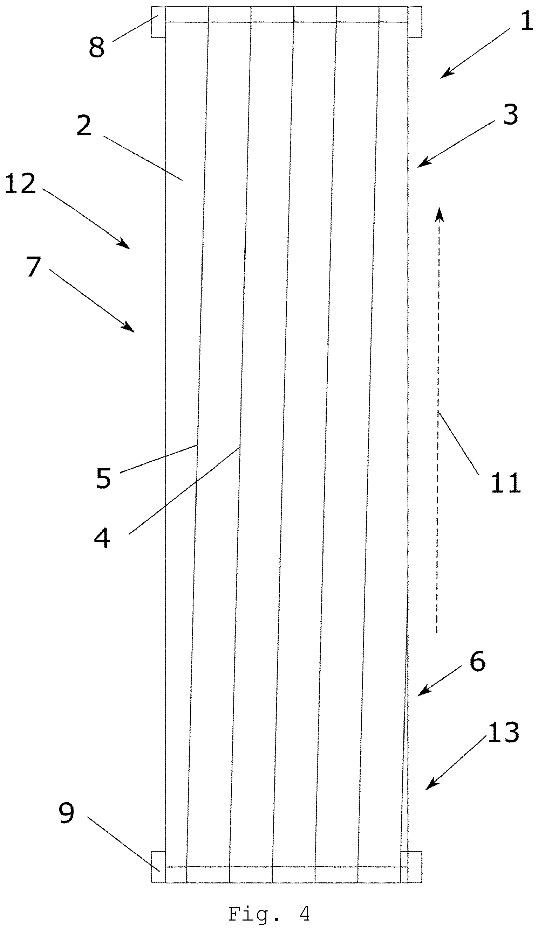

In den Figuren 1, 2, 3 und 4 ist dargestellt, dass der Gurtstreifen 2 einen Schräglauf zu den beiden Umlenkrollen 8, 9 aufweist. Der Gurtstreifen 2 ist um die Umlenkrollen 8 und 9 aufgewickelt. Linksseitig in der Figur 3 ist der Gurtstreifen 2 im Bereich der zweite Flanke der Förderanlage 7 beschnitten und der erste Rand des Gurtstreifens 12 besäumt dargestellt. Rechtsseitig und linksseitig in der Figur 4 ist der Gurtstreifen 2 im Bereich der ersten Flanke der Förderanlage 6, sowie der zweiten Flanke der Förderanlage 7 keilförmig beschnitten und beide Ränder des Gurtbandes 12, 13 besäumt dargestellt.

Darüber hinaus ist in einer Zusammenschau der Figuren 1, 2, 3 und 4 dargestellt, dass der erste Rand des Gurtbandes 12 aus der zumindest abschnittsweise keilförmig beschnittenen und/oder besäumten zweiten Flanke des Gurtstreifens 5 gebildet ist, sowie dass der zweite Rand des Gurtbandes 13 aus der zumindest abschnittsweise keilförmig beschnittenen und/oder besäumten ersten Flanke des Gurtstreifens 4 gebildet. In der Figur 2 ist der Gurtstreifen 2 noch nicht zu einer Keilform an den Rändern des Gurtstreifens 12, 13 beschnitten und/oder besäumt dargestellt. Vorteilhaft können die Ränder des Gurtbandes 12, 13 orthogonal zur Laufrichtung der Förderanlage 11 ausgebildet sein.

### Bezugszeichenliste:

- 1: Förderanlage
- 2: Gurtstreifen
- 3: Gurtband
- 4: erste Flanke des Gurtstreifens
- 5: zweite Flanke des Gurtstreifens
- 6: erste Flanke der Förderanlage
- 7: zweite Flanke der Förderanlage
- 8: erste Umlenkrolle
- 9: zweite Umlenkrolle
- 10: Anfangsbereich des Gurtstreifens
- 11: Laufrichtung
- 12: erster Rand des Gurtbandes
- 13: zweiter Rand des Gurtbandes
- 14: Verbindungsmittel
- 15: Verbindungspunkt der ersten Flanke des Gurtstreifens
- 16: Verbindungspunkt der zweiten Flanke des Gurtstreifens

## Patentansprüche

1. Gurtband (3) für Förderanlagen (1), wobei die Förderanlage (1) eine erste Umlenkrolle (8), sowie eine zweite Umlenkrolle (9) umfasst
wobei das Gurtband (3) in sich geschlossen mittels eines spiralförmig geführten Gurtstreifens (2) gebildet ist, wobei eine erste Flanke des Gurtstreifens (4) mit einer zweiten Flanke des Gurtstreifens (5) zumindest abschnittsweise als ein gemeinsames Verbindungsmittel ausgebildet ist
**dadurch gekennzeichnet, dass** das Verbindungsmittel (14) als ein Kettenformschluss ausgebildet ist.

2. Gurtband (3) nach Anspruch 1 **dadurch gekennzeichnet, dass** die erste Flanke des Gurtstreifens (4) mit der zweiten Flanke des Gurtstreifens (5) zumindest abschnittsweise nicht lösbar verbunden ist.

3. Gurtband (3) nach Anspruch 1 oder 2 **dadurch gekennzeichnet, dass** das Verbindungsmittel (14) in der Art eines Gurtverbinders, bevorzugt in der Art eines Reißverschlusses, ausgebildet ist.

4. Gurtband (3) nach einem der vorausgegangenen Ansprüche **dadurch gekennzeichnet, dass** der Gurtstreifen (2) eine Breite zwischen 500mm und 100mm, insbesondere zwischen 400mm und 200mm, bevorzugt zwischen 300mm und 250mm aufweist.

5. Gurtband (3) nach einem der vorausgegangenen Ansprüche, **dadurch gekennzeichnet, dass** ein beliebiger Verbindungspunkt der ersten Flanke des Gurtstreifens (15) mit einem komplementären beliebigen Verbindungspunkt der zweiten Flanke des Gurtstreifens (16) verbindbar ist.

6. Gurtband (3) nach einem der vorausgegangenen Ansprüche, **dadurch gekennzeichnet, dass** das Verbindungsmittel (14) ausschließlich die erste Flanke des Gurtstreifens (4) mit der zweiten Flanke des Gurtstreifens (5) verbindet.

7. Gurtband (3) nach einem der vorausgegangenen Ansprüche, **dadurch gekennzeichnet, dass** der Gurtstreifen (2) einen Schräglauf zu den Umlenkrollen (8, 9) aufweist.

8. Gurtband (3) nach einem der vorausgegangenen Ansprüche, **dadurch gekennzeichnet, dass** der Gurtstreifen (2) an den Rändern des Gurtbandes (12, 13) eine Keilform aufweist.

9. Gurtband (3) nach einem der vorausgegangenen Ansprüche, **dadurch gekennzeichnet, dass** das Gurtband (3) längenvariabel und/oder breitenvariabel ausgebildet ist.

10. Verfahren zur Installation eines Gurtbandes (3) nach einem der vorausgehenden Ansprüche, umfassend die Verfahrensschritte:
- Umschlingen der erste Umlenkrolle der Förderanlage (8), sowie der zweiten Umlenkrolle der Förderanlage (9) mittels eines Anfangsbereichs (10) des Gurtstreifens;
- abschnittsweises Verbinden der ersten Flanke des Gurtstreifens (4) mit der zweiten Flanke des Gurtstreifens (5) ;
- fortlaufend spiralförmiges Verbinden der Flanken des Gurtstreifens (4, 5) zur vollen Breite der Förderanlage zur Bildung des Gurtbandes (3);
- Besäumen des zu dem Gurtband (3) gebildeten Gurtstreifens an den Flanken (6, 7) der Förderanlage.

11. Verfahren nach einem der vorausgegangenen Ansprüche **dadurch gekennzeichnet, dass** die erste Umlenkrolle (8), sowie die zweite Umlenkrolle (9) entgegengesetzt der Laufrichtung (11) der Förderanlage (1) umschlungen werden.

12. Verfahren nach einem der vorausgehenden Ansprüche umfassend die Verfahrensschritte:
- Befestigen eines Anfangsbereichs (10) des Gurtstreifens (2) an einem bereits vorhandenen Alt-Gurtband;
- Entfernen des Alt-Gurtbandes.
